# EUROPEAN PATENT APPLICATION

(11) **EP 2 464 079 A1**
(43) Date of publication of application: **13.06.2012**
(21) Application number: 10814959.2
(22) Date of filing: 06.08.2010
(51) Int. Cl.: H04L 29/06

(54) **METHOD FOR AUTHENTICATING COMMUNICATION TRAFFIC, COMMUNICATION SYSTEM AND PROTECTION APPARATUS**

(30) Priority: 08.09.2009 CN 200910190037
(71) Applicant: Huawei Technologies Co., Ltd., Shenzhen, Guangdong 518129 (CN)
(72) Inventor: GAO, Cheng, Shenzhen Guangdong 518129 (CN)
(74) Representative: Epping - Hermann - Fischer
(86) International application number: PCT/CN2010/075751
(87) International publication number: WO 2011/029357

(57) **Abstract**

Embodiments of the present invention provide a method for authenticating communication traffic, a protective apparatus and a communication system, and relate to the fields of communications and computer. The method includes: a TCP packet is authenticated before it arrives at the server, to verify the true source address of the TCP packet, further verify whether the TCP packet is an attack packet, and determine whether the sender of the TCP packet is allowed to set up a TCP connection with the server, thereby effectively preventing DoS attacks that are launched through TCP packets and improving communication security.

## Description

This application claims priority to Chinese Patent Application No. CN200910190037.4, filed with the Chinese Patent Office on September 08, 2009 and entitled "METHOD FOR AUTHENTICATING COMMUNICATION TRAFFIC, COMMUNICATION SYSTEM, AND PROTECTIVE APPARATUS", which is incorporated herein by reference in its entirety.

### FIELD OF THE INVENTION

The present invention relates to the fields of communications and computer, and in particular, to a method for authenticating communication traffic, a communication system, and a protective apparatus.

### BACKGROUND OF THE INVENTION

In a denial of service (Denial of service, DoS) attack, an attacker uses a huge volume of message traffic to attack a victim network or server. The processing for the traffic may consume available bandwidth, CPU capability or other critical system resources of the victim, and ultimately disables the victim to serve legal customers thereof A distribution DoS (Distribution DoS, DDoS) attack involves generation of emulated network traffic that comes from multiple sources simultaneously, so it may bring greater destruction. In a traditional large-bandwidth attack, the source of the attack may be tracked under assistance of statistical analysis on the source Internet Protocol (Internet Protocol, IP) address of an input packet (Packet). Afterward, the victim may filter out any traffic originated from suspicious IP addresses, and may use this evidence to take a legal action against the attacker. However, many attacks now use a "spoofed (Spoofed)" IP packet - a packet that includes a false IP source address, which makes it harder for the victim to prevent themselves from suffering attacks.

Therefore, a method for preventing DoS attacks and improving communication security is required.

### SUMMARY OF THE INVENTION

An embodiment of the present invention provides a method, an apparatus, and a system for authenticating communication traffic on a network, so as to prevent DoS attacks and improve communication security.

An implementation mode for solving the foregoing technical issue in an embodiment of the present invention is: providing a method for authenticating communication traffic, which is applicable to a scenario that includes at least one client and a server, where the method includes:
receiving a first Transmission Control Protocol TCP packet sent by a certain client;
determining whether a source address of the first TCP packet has passed authentication; forwarding the first TCP packet to the server if the source address of the first TCP packet has passed authentication; sending a second TCP packet to a sender of the first TCP packet if the source address of the first TCP packet has not passed authentication, where a part of fields of the second TCP packet encapsulate a Cookie, and the second TCP packet includes no TCP ACK packet;
receiving a third TCP packet sent by the sender of the first TCP packet, determining whether a corresponding field value of the third TCP packet matches the Cookie, determining that the source address of the sender of the first TCP packet is false if the corresponding field value of the third TCP packet does not match the Cookie; determining that the source address of the sender of the first TCP packet is true if the corresponding field value of the third TCP packet matches the Cookie; and
allowing the sender of the first TCP packet to set up a TCP connection with the server when the sender of the first TCP packet sends a TCP connection request to the server again.

A protective apparatus provided by an embodiment of the present invention includes: an obtaining module, a first determining module, a second determining module, a sending module, and a forwarding module.

The obtaining module is configured to obtain a first Transmission Control Protocol TCP packet sent by a certain client to a server.

The first determining module is configured to determine whether a source address of the first TCP packet obtained by the obtaining module has passed authentication. If the source address of a sender of the first TCP packet has passed authentication, it indicates that the source address of the sender of the first TCP packet is verified as a true source address, and the sender of the first TCP packet is allowed to set up a TCP connection with the server, and the forwarding module forwards the first TCP packet to the server, so that the client sets up a TCP connection with the server directly; if the source address of the first TCP packet has not passed authentication, the sending module sends a second TCP packet to the client, where a part of fields of the second TCP packet encapsulate a Cookie.

The obtaining module is further configured to receive a third TCP packet sent by the client, and deliver the packet to the second determining module.

The second determining module is configured to determine whether a corresponding field value of the third TCP packet matches the Cookie; determine that the source address of the client is true if the corresponding field value of the third TCP packet matches the Cookie; and determine that the source address of the client is false if the corresponding field value of the third TCP packet does not match the Cookie.

If the source address of the client is true, when the obtaining module receives a fourth TCP packet sent by the client, the forwarding module forwards the fourth TCP packet to the server.

An embodiment of the present invention further provides a communication system, which includes a server, at least one client, and a protective apparatus that is located between the server and the at least one client.

The client is configured to send a first TCP packet to the server, so as to set up a TCP connection with the server.

The protective apparatus is configured to: intercept the first TCP packet sent by the client to the server, and determine whether a source address of a sender of the first TCP packet is verified; forward the first TCP packet to the server if the source address of the sender of the first TCP packet is verified as true; send a second TCP packet to the sender of the first TCP packet if the source address of the sender of the first TCP packet is not verified, where some field(s) of the second TCP packet encapsulate a Cookie; determine that the source address of the sender of the first TCP packet is true if a corresponding field value of a third packet returned by the sender of the first TCP packet matches the Cookie; and forward a fourth TCP packet to the server upon receiving the fourth TCP packet sent by the sender of the first TCP packet.

The server is configured to receive the fourth TCP packet sent by the protective apparatus, respond to the fourth TCP packet sent by the sender of the first TCP packet, and set up a TCP connection with the client.

Through the method for authenticating communication traffic, communication system and protective apparatus in the embodiments of the present invention, the TCP packet is authenticated before it arrives the server, to verify the true source address thereof, further verify whether the TCP packet is an attack packet, and determine whether the sender of TCP packet is allowed to set up a TCP connection with the server, thereby effectively preventing DoS attacks that are launched through TCP packets.

### BRIEF DESCRIPTION OF THE DRAWINGS

FIG. 1 is schematic flowchart of a processing method for a situation where both communication parties send SYN packets simultaneously when setting up a TCP connection as defined in RFC793;

FIG. 2 is a schematic structure diagram of a communication system where a TCP client communicates with a TCP server through a protective apparatus;

FIG. 3 is a schematic flowchart of a method for authenticating communication traffic according to an embodiment of the present invention;

FIG. 4 is a schematic flowchart of a method for authenticating communication traffic according to an embodiment of the present invention;

FIG. 5 is a schematic flowchart of another method for authenticating communication traffic according to an embodiment of the present invention;

FIG. 6 is a schematic flowchart of a method for authenticating communication traffic according to an embodiment shown in FIG. 5;

FIG. 7 is a schematic flowchart of another method for authenticating communication traffic according to an embodiment of the present invention;

FIG. 8 and FIG. 9 are schematic flowcharts of another method for authenticating communication traffic according to an embodiment of the present invention;

FIG. 10 is a schematic structure diagram of a communication system according to an embodiment of the present invention;

FIG. 11 is a schematic structure diagram of a protective apparatus according to an embodiment of the present invention; and

FIG. 12 is a schematic structure diagram of another protective apparatus according to an embodiment of the present invention.

### DETAILED DESCRIPTION OF THE EMBODIMENTS

The implementation process of the present invention is illustrated below with reference to specific implementation modes.

The Transmission Control Protocol/Internet Protocol (Transmission Control Protocol/Internet Protocol, TCP/IP) Suite is a transmission protocol most widely used in the digital packet network currently. The TCP is a connection-oriented end-to-end full-duplex protocol, and provides reliable inter-thread communication between thread pairs in a host. The information exchanging between the same levels of devices of TCP is assembled into a datagram called segment (segment). Each datagram includes a TCP header, which is followed by payload data. A segment is transmitted on the network in the form of IP packets. Postel describes TCP (Transmission Control Protocol) in RFC793 named "Transmission Control Protocol: DARPA Internet Program Protocol Specification (Transmission Control Protocol: DARPA Internet Program Protocol Specification" published by Defense Advanced Research Projects Agency (DARPA) of America, and RFC793 is incorporated herein by reference. The following description on certain features of TCP is based on information in RFC793. For more details, reference may be made to the relevant RFC.

A sequence number (Sequence Number) is allocated to every eight bytes sent in a TCP segment. This sequence number is used by the receiving computer for recovering the segment from damage, loss or duplication of a packet, and for resequencing the segments that are delivered in an erroneous order. Upon receiving a segment, the receiver should give a positive acknowledgement (ACK) by returning to the sender a packet whose TCP header is set with an "ACK" control bit. If the sender receives no ACK in the timeout interval, the sender sends the data again. Because the TCP is a full-duplex protocol, the header of each segment includes a field indicating the sequence number, and a field indicating an acknowledgment number (Acknowledgment Number). The sequence number field stores the sequence number of the first octet in the segment (or, in the case of a SYN packet, the initial sequence number (Initial Sequence, ISN)). The acknowledgement number field includes a value of the next sequence number which is expected by the segment sender to be received on the TCP connection. Therefore, through the highest sequence number of the last segment received, the acknowledgement number is determined. To manage the amount of data sent by the sender, the receiver returns a "window" when returning each ACK, where the window indicates a range of sequence numbers that are acceptable apart from the last segment received successfully.

To set up a TCP connection, two participating computers use well-known "three-way handshake (three-way handshake)" to synchronize the initial sequence number of each other. Handshake is based on exchanging of connection setup segments and the initial sequence number, where the connection setup segment has a header that includes a control bit called "SYN". Each party also needs to receive the initial sequence number of the other party and send an acknowledgement. To enable the connection, computer A sends a SYN packet to computer B, indicating the initial sequence number (ISN) of computer A. Computer B responds with a SYN-ACK packet, gives its own ISN, and acknowledges the ISN sent by computer A (by setting an ACK bit and putting the value "ISN+1" into the acknowledgement number field). Finally, computer A responds with an ACK packet to acknowledge the ISN sent by computer B, and therefore, the connection is set up.

The header of the TCP segment further includes an "RST" control bit. This control bit is configured to reset an incorrectly synchronized TCP connection when it is necessary to reset the incorrectly synchronized TCP connection. A general rule is as follows: So long as the connection is not in an "established" state, the RST packet (where a RST bit is set) is sent no matter when the segment that obviously does not expect to continue the current connection arrives. Therefore, for example, if a computer that is in a process of setting up a TCP connection receives an ACK packet inclusive of an unexpected acknowledgement number, the receiving computer returns an RST packet to the sending computer.

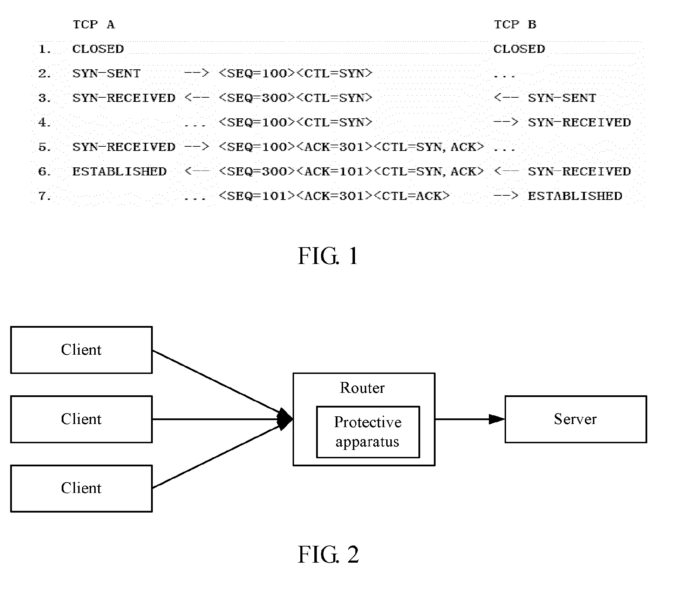

In the embodiment of the present invention, a TCP reverse detection solution is used to prevent DoS attacks, and, in the embodiment of the present invention, the TCP state transition of the client complies with the definition in the TCP standard RFC793. RFC793 defines a processing method for a situation where both communication parties send TCP SYN packets when setting up a TCP connection. As shown in FIG. 1, TCP A sends a first SYN packet to TCP B, and, in the first SYN packet, SEQ = 100; TCP B sends a second SYN packet to TCP A, and, in the second SYN packet, SEQ = 300; after receiving the first SYN packet, TCP B returns a first SYN-ACK packet to TCP A, and, in the first SYN-ACK packet, the ACK number is 101. In this way, a TCP connection from TCP A to TCP B is set up. After receiving the second SYN packet, TCP A returns a second SYN-ACK packet to TCP B, and, in the second SYN-ACK packet, the ACK number is 301. In this way, a TCP connection from TCP B to TCP A is set up.

As shown in FIG. 2, a TCP client communicates with a TCP server through a protective apparatus, and TCP reverse detection is performed between the TCP client and the TCP server through the protective apparatus. Only the client communication data that passes the detection is allowed to be sent to the TCP server. The protective apparatus may be set on a router or an Inter-network device or a server. The inter-network device includes but is not limited to, an intermediate device such as firewall. Client and server here refer to the client and server as far as TCP connection is concerned; the client refers to a communication side that initiates a TCP connection; and the server refers to a communication side that receives the TCP connection.

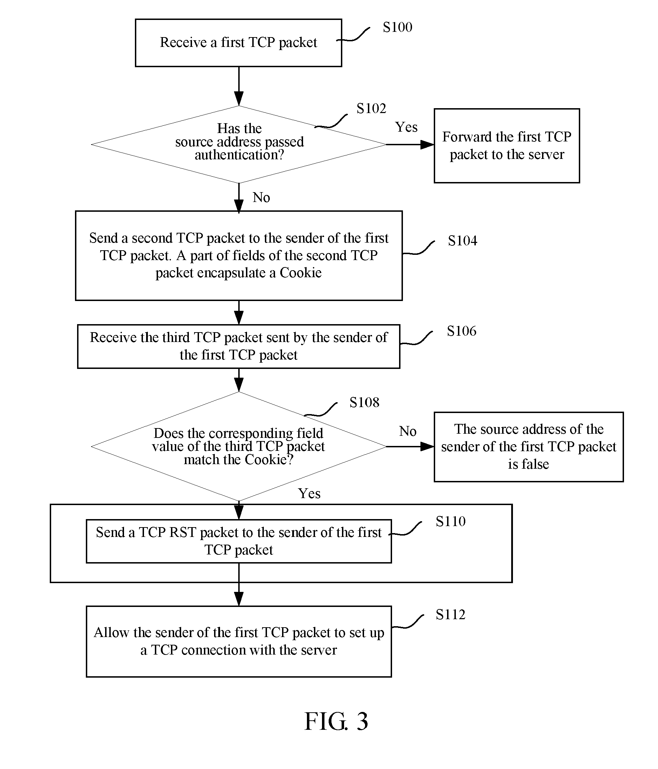

FIG. 3 shows a method for authenticating communication traffic according to an embodiment of the present invention. The method is applicable to a scenario that includes at least one client and a server, and the method includes:

S100: Receive a first TCP packet sent by a certain client.

The protective apparatus obtains the first TCP packet sent by the client to the server, where the first TCP packet may be a TCP SYN packet, and may also be a TCP SYN-ACK packet.

S102: Determine whether a source address of the first TCP packet has passed authentication; forward the first TCP packet to the server if the source address of the first TCP packet has passed authentication; and perform S104 if the source address of the first TCP packet has not passed authentication.

The protective apparatus determines whether a source address of the first TCP packet has passed authentication; forwards the first TCP packet to the server if the source address of the first TCP packet has passed authentication; performs S104 if the source address of the first TCP packet has not passed authentication.

S104: Send a second TCP packet to the sender of the first TCP packet. A part of fields of the second TCP packet encapsulate a Cookie, and the second TCP packet includes no TCP ACK packet. Perform S106.

S106: Receive a third TCP packet sent by the sender of the first TCP packet, and perform S108.

S108: Determine whether the corresponding field value of the third TCP packet matches the Cookie; determine that the source address of the sender of the first TCP packet is false if the corresponding field value of the third TCP packet does not match the Cookie; determine that the source address of the sender of the first TCP packet is true if the corresponding field value of the third TCP packet matches the Cookie; and perform S110.

S110: Send a TCP RST packet to the sender of the first TCP packet, and perform S112.

S112: Allow the sender of the first TCP packet to set up a TCP connection with the server.

Allow the sender of the first TCP packet to set up a TCP connection with the server when the sender of the first TCP packet initiates a TCP connection request to the server again.

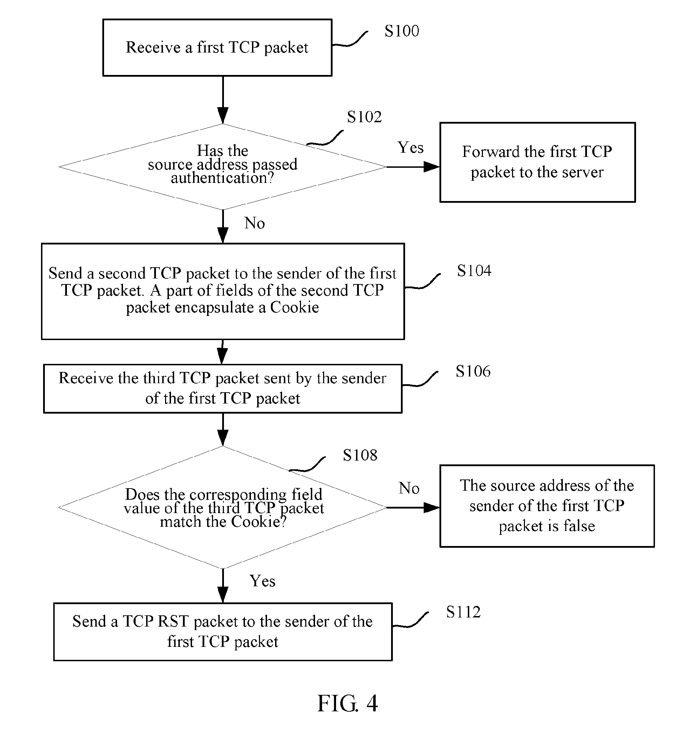

S110 is an optional step. After S108 is complete, S110 is not required, and the process proceeds to S112 directly. A specific flowchart is as shown in FIG. 4.

Preferably, if the first TCP packet is a first TCP SYN packet, the second TCP packet is a second TCP SYN packet; the SEQ field in the second TCP SYN packet encapsulates a Cookie; and the third TCP packet is a TCP SYN-ACK packet; the corresponding field value of the third TCP packet matches the Cookie, and the value of the ACK field of the third TCP packet is equal to the Cookie plus 1, namely, ACK = Cookie + 1.

Preferably, if the first TCP packet is a first TCP SYN packet, the second TCP packet is a second TCP SYN-ACK packet; the ACK field in the second TCP SYN-ACK packet encapsulates a Cookie; and the third TCP packet is a TCP RST packet; the corresponding field value of the third TCP packet matches the Cookie, and the value of the SEQ field of the third TCP packet is equal to the Cookie, namely, SEQ = Cookie.

Preferably, if the first TCP packet is a first TCP SYN-ACK packet, the second TCP packet is a second TCP SYN-ACK packet; the ACK field in the second TCP SYN-ACK packet encapsulates a Cookie; and the third TCP packet is a TCP RST packet; the corresponding field value of the third TCP packet matches the Cookie, and the value of the SEQ field of the third TCP packet is equal to the Cookie, namely, SEQ = Cookie.

Preferably, before receiving the first TCP SYN-ACK packet, the method further includes: the server sends a fourth TCP SYN packet to the client, requesting to set up a TCP connection with the client; after receiving the fourth TCP SYN packet, the client sends the first TCP SYN-ACK packet.

Preferably, the source address is an Internet Protocol IP address, and the IP address includes an IPv4 address, or an IPv6 address.

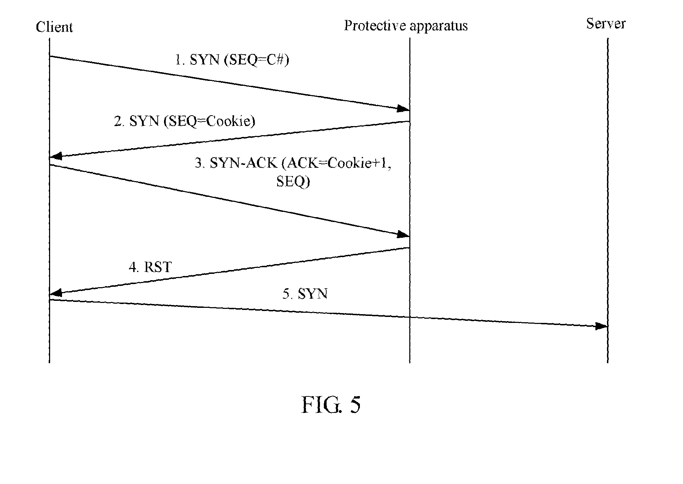

As shown in FIG. 5, in an embodiment of the present invention, a protective apparatus intercepts a first TCP handshake SYN packet sent by the client to the server, and does not return a first SYN-ACK packet according to the TCP three-way handshake procedure, but sends a second SYN packet to the client according to the scenario of setting up a TCP connection simultaneously as defined in RFC793. Moreover, a Cookie is written into the SEQ field value in the TCP header of the second SYN packet. That is, in the second SYN packet, SEQ = Cookie. According to RFC793, the client with a true source address returns a second SYN-ACK packet in response to the second SYN packet sent by the protective apparatus. The ACK field value of the second SYN-ACK packet should be Cookie+1. That is, in the second SYN-ACK packet, ACK = Cookie + 1. The protective apparatus may detect truth of the source address of the client by detecting the ACK field value in the second SYN-ACK packet. If the ACK field value in the second SYN-ACK packet is not equal to Cookie+1, it is determined that the source address of the first SYN packet is false, and the protective apparatus may discard TCP packets subsequent to the TCP packet whose TCP header includes a source address equal to the source address of the first SYN packet; if the ACK field value in the second SYN-ACK packet is equal to Cookie+1, it is determined that the source address of the first SYN packet is true, and the protective apparatus may send a TCP RST packet to the client that sends the first SYN packet, so as to reset the connection, and may forward the third SYN packet, which is sent by the client again, to the server directly, so that a TCP connection is set up between the client and the server directly.

If the protective apparatus is located on the router, when providing protection for the server against the DDoS attacks, the protective apparatus may serve as an extended functional board of the router, performs reverse detection for the source address of the data packet before the router forwards the data packet, and discards suspicious DDoS attack packets. In this way, not only the server is protected, but also the traffic of attack data packets on the communication line is reduced effectively.

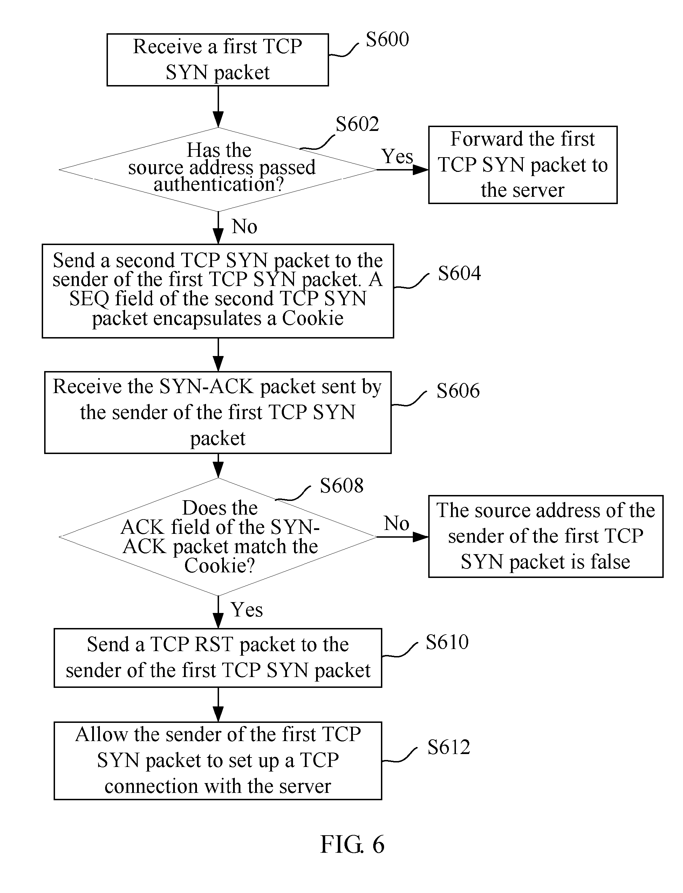

As shown in FIG. 6, in an embodiment of the present invention, a protective apparatus is set between a client and a server. A method for authenticating communication traffic includes:

S600: Receive a first TCP SYN packet.

When the client expects to set up a TCP connection with the server for communication, the client sends the first TCP SYN packet to the server. The protective apparatus located between the client and the server obtains the first TCP SYN packet sent by the client to the server.

S602: Determine whether a source address of the first TCP SYN packet has passed authentication; forward the first TCP SYN packet to the server if the source address of the first TCP SYN packet has passed authentication; and perform S604 if the source address of the first TCP SYN packet has not passed authentication.

When the first TCP SYN packet sent by a client is intercepted by the protective apparatus, it is determined whether the source address of the first TCP SYN packet has passed authentication; if the source address of the first TCP SYN packet has passed authentication, it indicates that the source address of the first TCP SYN packet is verified as a true and legal source address, and the client may set up a TCP connection with the server, and therefore, the protective apparatus forwards the first TCP SYN packet to the server, so that the client sets up a TCP connection with the server directly; if the source address of the first TCP SYN packet has not passed authentication, perform S604.

S604: Send a second TCP SYN packet to the sender of the first TCP SYN packet. The SEQ field in the second TCP SYN packet encapsulates a Cookie. That is, in the second TCP SYN packet, SEQ = Cookie.

If the protective apparatus verifies that the source address of the first TCP SYN packet has not passed authentication, the protective apparatus sends a second TCP SYN packet to the sender of the first TCP SYN packet, and the SEQ field of the second TCP SYN packet encapsulates a Cookie, that is, in the second TCP SYN packet, SEQ = Cookie. The value of the Cookie is calculated out through a Hash algorithm according to the quintuple information of the sender of the first TCP SYN packet. The quintuple information of the sender of the first TCP SYN packet includes: source IP address of the sender of the first TCP SYN packet, destination IP address of the sender of the first TCP SYN packet, source port number of the sender of the first TCP SYN packet, destination port number of the sender of the first TCP SYN packet, and TCP/UDP (User Datagram Protocol) number of the sender of the first TCP SYN packet. The second TCP SYN packet is a TCP SYN packet compliant with the RFC793 definition, and indicates that the protective apparatus needs to set up a TCP connection with the sender of the first TCP SYN packet, namely, with the client. As defined in RFC793, in normal circumstances, namely, in the circumstance that the source address of the sender of the first TCP SYN packet is true, when the sender of the first TCP SYN packet receives the second TCP SYN packet sent by the protective apparatus as a request for setting up a TCP connection, the sender of the first TCP SYN packet sends a SYN-ACK packet to the sender of the second TCP SYN packet (namely, the protective apparatus) in response to the second TCP SYN packet. As defined in RFC793, the ACK field value of the SYN-ACK should be Cookie+1, namely, ACK = Cookie + 1.

S606: Receive the SYN-ACK packet sent by the sender of the first TCP SYN packet, and perform S608.

The protective apparatus receives the SYN-ACK packet sent by the sender of the first TCP SYN packet, and performs S608 to verify whether the SYN-ACK packet sent by the sender of the first TCP SYN packet meets a specific requirement.

S608: Determine whether the ACK number of the SYN-ACK packet matches the Cookie. If the ACK field value of the SYN-ACK packet matches the Cookie, perform S610; if the ACK field value of the SYN-ACK packet does not match the Cookie, determine that the source address of the sender of the first TCP SYN packet is false.

After receiving the SYN-ACK packet sent by the sender of the first TCP SYN packet (namely, a certain client), the protective apparatus determines whether the ACK field value of the SYN-ACK packet matches the Cookie, namely, determines whether the ACK field value of the SYN-ACK packet is equal to Cookie+1. If the ACK field value of the SYN-ACK packet is equal to Cookie+1, it indicates that the source address of the sender of the first TCP SYN packet is true, and the process proceeds to S610; if the ACK field value of the SYN-ACK packet is not equal to Cookie+1, it indicates that the source address of the sender of the first TCP SYN packet is false.

S610: Send a TCP RST packet to the sender of the first TCP SYN packet.

If determining that the source address of the sender of the first TCP SYN packet is true, the protective apparatus sends a TCP RST packet to the sender of the first TCP SYN packet to reset the TCP connection to be set up as required by the sender of the first TCP SYN packet.

S612: Allow the sender of the first TCP SYN packet to set up a TCP connection with the server.

After receiving the TCP RST packet sent by the protective apparatus, the sender of the first TCP SYN packet sends a third TCP SYN packet to the server, requesting to set up a TCP connection with the server. After obtaining the third TCP SYN packet, the protective apparatus verifies that the source address of the third TCP SYN packet has passed authentication and is a true source address, and forwards the third TCP SYN packet, which is sent by the client again, to the server directly, so that the TCP connection is set up between the client and the server.

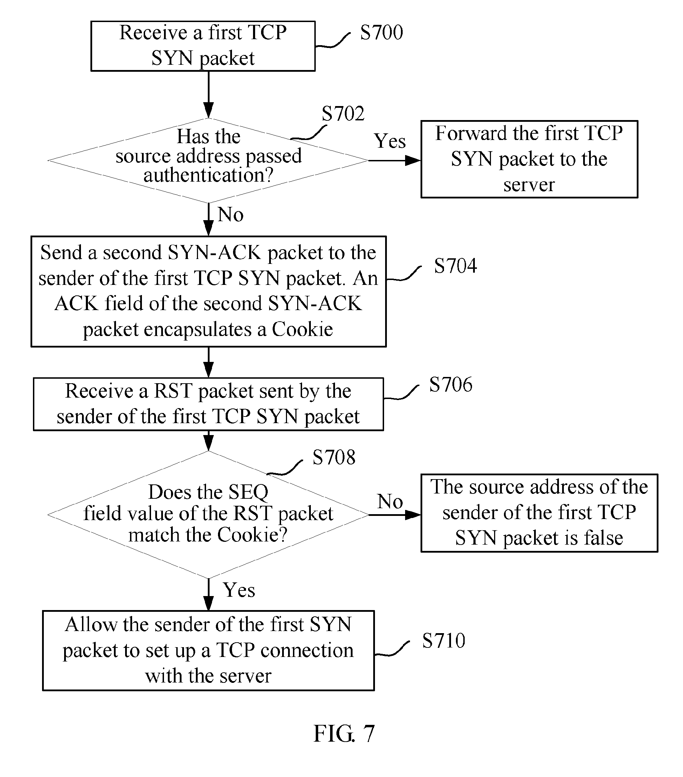

As shown in FIG. 7, in another embodiment of the present invention, a protective apparatus is set between a client and a server, and the method includes:

S700: Receive a first TCP SYN packet.

When a client expects to set up a TCP connection with the server for communication, the client sends the first TCP SYN packet to the server. The protective apparatus located between the client and the server obtains the first TCP SYN packet sent by the client to the server.

S702: Determine whether a source address of the first TCP SYN packet has passed authentication; forward the first TCP SYN packet to the server if the source address of the first TCP SYN packet has passed authentication; and perform S704 if the source address of the first TCP SYN packet has not passed authentication.

When the first TCP SYN packet sent by a client is intercepted by the protective apparatus, the protective apparatus determines whether the source address of the first TCP SYN packet has passed authentication; if the source address of the first TCP SYN packet has passed authentication, the source address of the first TCP SYN packet is verified as a true and legal source address, and the client may set up a TCP connection with the server, and the protective apparatus forwards the first TCP SYN packet to the server so that the client sets up a TCP connection with the server directly; if the source address of the first TCP SYN packet has not passed authentication, perform S704.

S704: Send a SYN-ACK packet to the sender of the first TCP SYN packet. The ACK field in SYN-ACK packet encapsulates a Cookie. That is, in the SYN-ACK packet, ACK = Cookie. Perform S706.

If the protective apparatus verifies that the source address of the first TCP SYN packet has not passed authentication, the protective apparatus sends a SYN-ACK packet to the sender of the first TCP SYN packet. The ACK field of the SYN-ACK packet encapsulates a Cookie. That is, in the SYN-ACK packet, ACK = Cookie. The value of the Cookie is not equal to the SEQ field value of the first TCP SYN packet plus 1. The value of the Cookie is calculated out through a Hash algorithm according to the quintuple information of the sender of the first TCP SYN packet. The quintuple information of the sender of the first TCP SYN packet includes: source IP address of the sender of the first TCP SYN packet, destination IP address of the sender of the first TCP SYN packet, source port number of the sender of the first TCP SYN packet, destination port number of the sender of the first TCP SYN packet, and TCP/UDP number of the sender of the first TCP SYN packet. In normal circumstances, namely, in the circumstance that the source address of the sender of the first TCP SYN packet is true, when the sender of the first TCP SYN packet receives the SYN-ACK packet sent by the protective apparatus, the ACK field value of the SYN-ACK packet should be equal to the SEQ field value of the first TCP SYN packet plus 1. However, because the ACK value of the SYN-ACK packet sent by the protective apparatus to the sender of the first TCP SYN packet is not equal to the SEQ field value of the first TCP SYN packet plus 1 but is equal to the Cookie, the sender of the first TCP SYN packet sends a TCP RST packet to reset the TCP connection. When the source address of the sender of the first TCP SYN packet is true, the SEQ field value of the TCP RST packet should be equal to the Cookie.

S706: Receive the RST packet sent by the sender of the first TCP SYN packet, and perform S708.

The protective apparatus receives the TCP RST packet sent by the sender of the first TCP SYN packet, and performs S708 to verify whether the TCP RST packet sent by the sender of the first TCP SYN packet meets a specific requirement.

S708: Determine whether the SEQ value of the TCP RST packet matches the Cookie; determine that the source address of the sender of the first TCP SYN packet is false if the SEQ field value of the TCP RST packet does not match the Cookie; determine that the source address of the sender of the first TCP SYN packet is true if the SEQ field value of the TCP RST packet matches the Cookie; and perform S710.

After receiving the TCP RST packet sent by the sender of the first TCP SYN packet, the protective apparatus determines whether the SEQ value of the TCP RST packet matches the Cookie, namely, determines whether the SEQ field value of the TCP RST packet is equal to the Cookie. If the SEQ field value of the TCP RST packet is equal to the Cookie, it indicates that the source address of the sender of the first TCP SYN packet is true, and the process proceeds to S710; if the SEQ field value of the TCP RST packet is not equal to the Cookie, it indicates that the source address of the sender of the first TCP SYN packet is false.

S710: The protective apparatus allows the sender of the first TCP SYN packet to set up a TCP connection with the server when the sender of the first TCP SYN packet initiates a TCP connection request to the server again.

The sender of the first TCP SYN packet sends a second TCP SYN packet to the server, requesting to set up a TCP connection with the server. After intercepting the second TCP SYN packet, the protective apparatus verifies that the source address of the second TCP SYN packet has passed authentication and is a true source address, and forwards the second TCP SYN packet, which is sent by the client again, to the server directly, so that a TCP connection is set up between the client and the server.

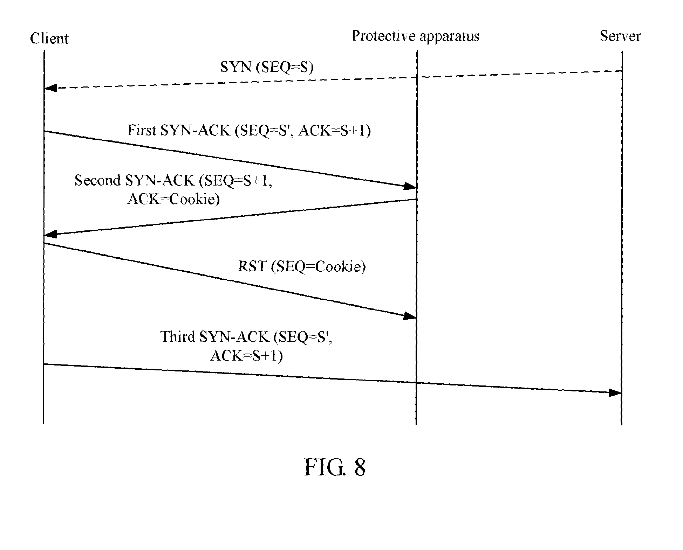

As shown in FIG. 8, in an embodiment of the present invention, a protective apparatus is set between a client and a server. In a scenario, the server sends a TCP connection request to a certain client. That is, the server sends a first TCP SYN packet to a certain client. It is assumed that in the TCP SYN packet, SEQ = S, where S is an arbitrary value. If the TCP client is not an attack source, namely, if the source address of the TCP client is true, according to RFC793, the TCP client will return a first SYN-ACK packet in response to the first TCP SYN packet sent by the server. In the first SYN-ACK packet, SEQ = S', ACK = S + 1, and S' is an arbitrary value.

Definitely, the first SYN-ACK packet may also be a DoS attack packet sent by an attacker.

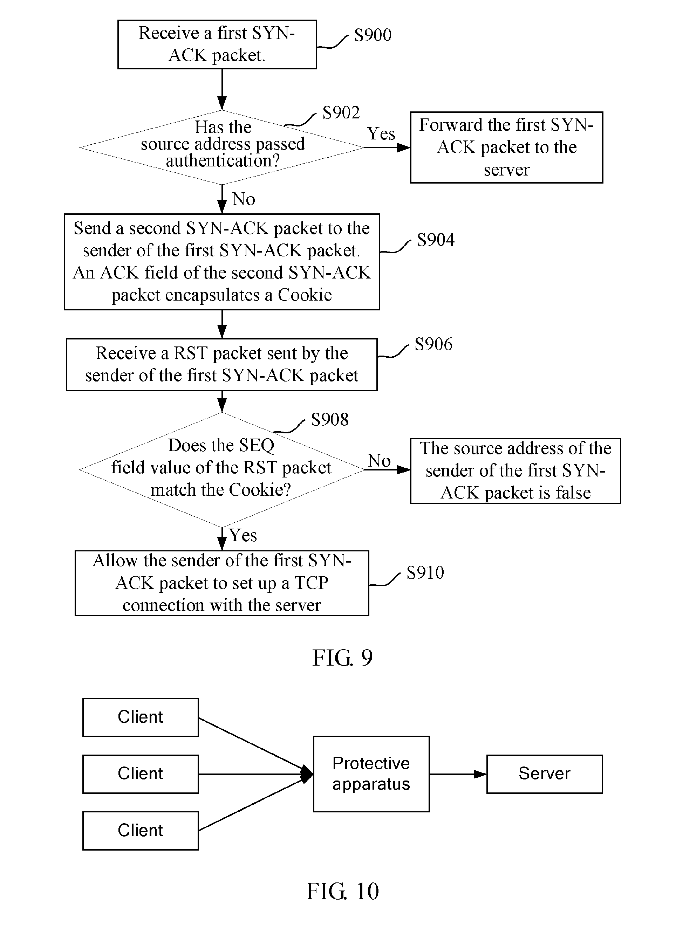

The first SYN-ACK packet sent by the client to the server is intercepted by the protective apparatus before arriving at the server. The protective apparatus does not obtain the packet that is sent by the server to the client, but obtains only the packet that is sent by the client to the server. Therefore, when obtaining the first SYN-ACK packet sent by the client to the server, the protective apparatus needs to verify whether the source address of the first SYN-ACK packet is true. FIG. 9 is a schematic flowchart of another method for authenticating communication traffic according to an embodiment of the present invention. The method includes:

S900: Receive a first SYN-ACK packet.

The protective apparatus obtains the first SYN-ACK packet sent by the client.

S902: Determine whether the source address of the first SYN-ACK packet has passed authentication; forward the first SYN-ACK packet to the server if the source address of the first SYN-ACK packet has passed authentication; and perform S904 if the source address of the first SYN-ACK packet has not passed authentication.

When the first SYN-ACK packet sent by a client is intercepted by the protective apparatus, the protective apparatus determines whether the source address of the first SYN-ACK packet has passed authentication; if the source address of the first SYN-ACK packet has passed authentication, it indicates that the source address of the first SYN-ACK packet is verified as a true and legal source address, and the client may set up a TCP connection with the server, and the protective apparatus forwards the first SYN-ACK packet to the server, so that the client sets up a TCP connection with the server directly; if the source address of the first SYN-ACK packet has not passed authentication, perform S904.

S904: Send a second SYN-ACK packet to the sender of the first SYN-ACK packet. The ACK field in the second SYN-ACK packet encapsulates a Cookie. That is, in the second SYN-ACK packet, ACK = Cookie. Perform S906.

If the protective apparatus verifies that the source address of the first SYN-ACK packet has not passed authentication, the protective apparatus sends a second SYN-ACK packet to the sender of the first SYN-ACK packet. The ACK field of the second SYN-ACK packet encapsulates a Cookie. That is, in the second SYN-ACK packet, ACK = Cookie; SEQ = S+1. Definitely, the SEQ may also be another arbitrary value. The value of the Cookie is calculated out through a Hash algorithm according to the quintuple information of the sender of the first TCP SYN packet. The quintuple information of the sender of the first TCP SYN packet includes: source IP address of the sender of the first TCP SYN packet, destination IP address of the sender of the first TCP SYN packet, source port number of the sender of the first TCP SYN packet, destination port number of the sender of the first TCP SYN packet, and TCP/UDP number of the sender of the first TCP SYN packet.

In normal circumstances, namely, in the circumstance that the source address of the sender of the first SYN-ACK packet is true, and the sender of the first SYN-ACK packet receives the first ACK packet sent by the opposite party (such as the server), the ACK field value of the second ACK packet should be equal to the SEQ field value of the first SYN-ACK packet plus 1. However, because the protective apparatus has sent the second SYN-ACK packet to the sender of the first SYN-ACK packet, and the ACK value of the second SYN-ACK packet is not equal to the SEQ value of the first SYN-ACK packet plus 1 but is equal to the Cookie, the sender of the first SYN-ACK packet sends a TCP RST packet to reset the TCP connection. When the source address of the sender of the first SYN-ACK packet is true, the SEQ field value of the TCP RST packet should be equal to the Cookie.

S906: Receive the RST packet sent by the sender of the first SYN-ACK packet, and perform S908.

The protective apparatus receives the TCP RST packet sent by the sender of the first SYN-ACK packet, and performs S908 to verify whether the TCP RST packet sent by the sender of the first SYN-ACK packet meets a specific requirement.

S908: Determine whether the SEQ field value of the TCP RST packet matches the Cookie; determine that the source address of the sender of the first SYN-ACK packet is false if the SEQ field value of the TCP RST packet does not match the Cookie; determine that the source address of the sender of the first SYN-ACK packet is true if the SEQ field value of the TCP RST packet matches the Cookie; and perform S910.

After receiving the TCP RST packet sent by the sender of the first SYN-ACK packet, the protective apparatus determines whether the SEQ field value of the TCP RST packet matches the Cookie, namely, determines whether the SEQ field value of the TCP RST packet is equal to the Cookie. If the SEQ field value of the TCP RST packet is equal to the Cookie, it indicates that the source address of the sender of the first SYN-ACK packet is true, and the process proceeds to S310; if the SEQ field value of the TCP RST packet is not equal to the Cookie, it indicates that the source address of the sender of the first SYN-ACK packet is false.

S910: The protective apparatus allows the sender of the first SYN-ACK packet to set up a TCP connection with the server when the sender of the first SYN-ACK packet sends a TCP packet to the server again.

The sender of the first SYN-ACK packet sends a third SYN-ACK packet to the server, requesting to set up a TCP connection with the server. In the third SYN-ACK packet, SEQ = S', and ACK = S + 1. After intercepting the third SYN-ACK packet, the protective apparatus verifies that the source address of the third SYN-ACK packet has passed authentication and is a true source address, and forwards the third SYN-ACK packet, which is sent by the client again, to the server directly, so that the TCP connection is set up between the client and the server.

An embodiment of the present invention also provides a communication system. As shown in FIG. 10, the communication system includes a server, at least one client, and a protective apparatus located between the server and the at least one client.

The client is configured to send a first TCP packet to the server, so as to set up a TCP connection with the server.

The protective apparatus is configured to: intercept the first TCP packet sent by the client to the server, and determine whether a source address of a sender of the first TCP packet is verified; forward the first TCP packet to the server if the source address of the sender of the first TCP packet is verified as true; send a second TCP packet to the sender of the first TCP packet if the source address of the sender of the first TCP packet is not verified, where a part of fields of the second TCP packet encapsulate a Cookie; determine that the source address of the sender of the first TCP packet is true if a corresponding field value of a third packet returned by the sender of the first TCP packet matches the Cookie; and forward a fourth TCP packet to the server upon receiving the fourth TCP packet sent by the sender of the first TCP packet.

The server is configured to receive the fourth TCP packet sent by the protective apparatus, respond to the fourth TCP packet sent by the sender of the first TCP packet, and set up a TCP connection with the client.

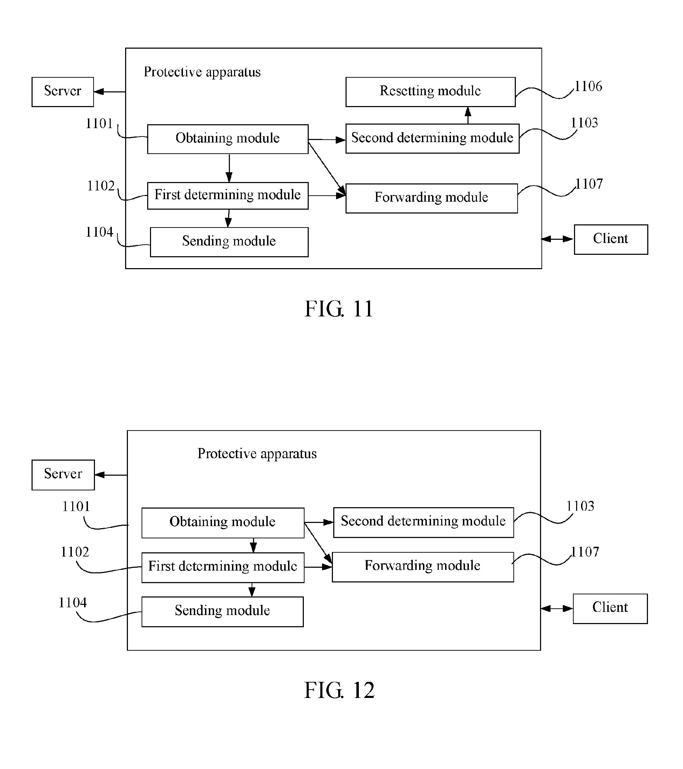

Specifically, the structure of the protective apparatus is as shown in FIG. 11, and includes an obtaining module 1101, a first determining module 1102, a second determining module 1103, a sending module 1104, a resetting module 1106, and a forwarding module 1107.

The obtaining module 1101 is configured to obtain a first TCP packet sent by a certain client to a server.

The first determining module 1102 is configured to determine whether a source address of the first TCP packet obtained by the obtaining module 1101 has passed authentication. If the source address of the first TCP packet has passed authentication, it indicates that the source address of the first TCP packet is verified as a true source address, and the forwarding module 1107 forwards the first TCP packet to the server, so that the client sets up a TCP connection with the server directly; if the source address of the first TCP packet has not passed authentication, the sending module 1104 sends a second TCP packet to the client, where a part of fields of the second TCP packet encapsulate a Cookie. As defined in RFC793, if the source address of the client is true, when the client receives the second TCP packet sent by the sending module 1104, the client sends a third TCP packet to the sender (namely, protective apparatus) of the second TCP packet in response to the second TCP packet. As defined in RFC793, the corresponding field value of the third TCP packet should match the Cookie.

The obtaining module 1101 is also configured to receive a third TCP packet sent by the client, and deliver the third TCP packet to the second determining module 1103;

The second determining module 1103 is configured to: determine whether a corresponding field value of the third TCP packet matches the Cookie. If the corresponding field value of the third TCP packet matches the Cookie, it indicates that the source address of the client is true; and if the corresponding field value of the third TCP packet does not match the Cookie, it indicates that the source address of the client is false.

If the source address of the client is true, the resetting module 1106 sends a TCP RST packet to the client to reset the TCP connection required by the client.

When the obtaining module 1101 receives a fourth TCP packet sent by the client, the forwarding module 1107 forwards the fourth TCP packet to the server, so that the client sets up a TCP connection with the server.

In this embodiment, the resetting module 1106 is not necessary, and in the protective apparatus, the resetting module 1106 may also be omitted. The embodiment without the resetting module 1106 is as shown in FIG. 12. When the resetting module 1106 is omitted, if the source address of the client that sends the first TCP packet is true, a fourth TCP packet may be sent again upon timeout of the TCP connection. When the obtaining module 1101 receives the fourth TCP packet sent by the client, the forwarding module 1107 forwards the fourth TCP packet to the server, so that the client sets up a TCP connection with the server.

In the communication system and protective apparatus above,
preferably, if the first TCP packet is a first TCP SYN packet, the second TCP packet is a second TCP SYN packet, the SEQ field in the second TCP SYN packet encapsulates a Cookie, and the third TCP packet is a TCP SYN-ACK packet; the corresponding field value of the third TCP packet matches the Cookie, and the value of the ACK field of the third TCP packet is equal to the Cookie plus 1, namely, ACK = Cookie + 1.

Preferably, if the first TCP packet is a first TCP SYN packet, the second TCP packet is a second TCP SYN-ACK packet; the ACK field in the second TCP SYN-ACK packet encapsulates a Cookie; and the third TCP packet is a TCP RST packet; the corresponding field value of the third TCP packet matches the Cookie, and the value of the SEQ field of the third TCP packet is equal to the Cookie, namely, SEQ = Cookie. At this time, no resetting module 1106 is required, that is, the protective apparatus does not necessarily send a TCP RST packet to reset the TCP connection, but the sender of the first TCP packet sends a TCP RST packet to reset the TCP connection.

Preferably, if the first TCP packet is a first TCP SYN-ACK packet, the second TCP packet is a second TCP SYN-ACK packet; the ACK field in the second TCP SYN-ACK packet encapsulates a Cookie; and the third TCP packet is a TCP RST packet; the corresponding field value of the third TCP packet matches the Cookie, and the value of the SEQ field of the third TCP packet is equal to the Cookie, namely, SEQ = Cookie. At this time, no resetting module 1106 is required, that is, the protective apparatus does not necessarily send a TCP RST packet to reset the TCP connection, but the sender of the first TCP packet sends a TCP RST packet to reset the TCP connection.

Preferably, before receiving the first TCP SYN-ACK packet, the method also includes: The server sends a fourth TCP SYN packet to the client, requesting to set up a TCP connection with the client; after receiving the fourth TCP SYN packet, the client sends the first TCP SYN-ACK packet.

Preferably, the source address is an Internet Protocol IP address, and the IP address includes an IPv4 address, or an IPv6 address.

In the embodiments of the present invention above, the source address is an IP address, and may be an IPv4 address or an IPv6 address.

Through the method for authenticating communication traffic, communication system and protective apparatus in the embodiments of the present invention, the TCP packet is authenticated before it arrives at the server, to verify the true source address of the TCP packet, further verify whether the TCP packet is an attack packet, and determine whether the sender of the TCP packet is allowed to set up a TCP connection with the server, thereby effectively preventing DoS attacks that are launched through TCP packets and improving communication security.

Through the description of the foregoing embodiments, persons skilled in the art may clearly understand that the embodiments of the present invention may be implemented through hardware on a necessary universal hardware platform, and definitely may also be implemented by hardware, but in most cases, the present invention is preferably implemented through the former method. Based on such understanding, the technical solution of the present invention or part that make contributions to the prior art may be substantially embodied in the form of a software product. The computer software product may be stored in readable storage medium, including several instructions used to instruct a computer device (such as a personal computer, a server, or a network device) to perform the method according to the embodiments of the present invention.

The above descriptions are merely exemplary embodiments of the present invention, but are not intended to limit the protection scope of the present invention. Any modification or replacement readily conceivable by those skilled in the art within the technical scope disclosed in the present invention shall fall within the protection scope of the present invention. Therefore, the protection scope of the present invention is subject to the appended claims.

## Claims

1. A method for authenticating communication traffic, applicable to a scenario that comprises at least one client and a server, **characterized by** comprising:
receiving a first TCP packet sent by a certain client;
determining whether a source address of the first Transmission Control Protocol TCP packet has passed authentication; forwarding the first TCP packet to the server if the source address of the first TCP packet has passed authentication; sending a second TCP packet to a sender of the first TCP packet if the source address of the first TCP packet has not passed authentication, wherein a part of fields of the second TCP packet encapsulate a Cookie, and the second TCP packet comprises no TCP ACK packet;
receiving a third TCP packet sent by the sender of the first TCP packet, determining whether a corresponding field value of the third TCP packet matches the Cookie, determining that the source address of the sender of the first TCP packet is false if the corresponding field value of the third TCP packet does not match the Cookie, and determining that the source address of the sender of the first TCP packet is true if the corresponding field value of the third TCP packet matches the Cookie; and
allowing the sender of the first TCP packet to set up a TCP connection with the server when the sender of the first TCP packet initiates a TCP connection request to the server again.

2. The method according to claim 1, **characterized in that**:
if the first TCP packet is a first TCP SYN packet, the second TCP packet is a second TCP SYN packet; a SEQ field in the second TCP SYN packet encapsulates a Cookie; and the third TCP packet is a TCP SYN-ACK packet; and
the corresponding field value of the third TCP packet matches the Cookie, and a value of the ACK field of the third TCP packet is equal to the Cookie plus 1.

3. The method according to claim 1, **characterized in that**:
if the first TCP packet is a first TCP SYN packet, the second TCP packet is a second TCP SYN-ACK packet; an ACK field in the second TCP SYN-ACK packet encapsulates a Cookie; and the third TCP packet is a TCP RST packet; and
the corresponding field value of the third TCP packet matches the Cookie, and a value of the SEQ field of the third TCP packet is equal to the Cookie.

4. The method according to claim 1, **characterized in that**:
if the first TCP packet is a first TCP SYN-ACK packet, the second TCP packet is a second TCP SYN-ACK packet; an ACK field in the second TCP SYN-ACK packet encapsulates a Cookie; and the third TCP packet is a TCP RST packet; and
the corresponding field value of the third TCP packet matches the Cookie, and a value of the SEQ field of the third TCP packet is equal to the Cookie.

5. The method according to claim 4, **characterized in that**: before receiving the first TCP SYN-ACK packet, the method also comprises:
sending, by the server, a fourth TCP SYN packet to the client to request to set up a TCP connection with the client; and, sending, by the client, the first TCP SYN-ACK packet after receiving the fourth TCP SYN packet.

6. The method according to any of claims 1-5, **characterized in that**: the source address is an Internet Protocol IP address.

7. A protective apparatus, **characterized by** comprising: an obtaining module, a first determining module, a second determining module, a sending module, and a forwarding module, wherein:
the obtaining module is configured to obtain a first TCP packet sent by a client to a server;
the first determining module is configured to determine whether a source address of the first TCP packet obtained by the obtaining module has passed authentication; if the source address of a sender of the first TCP packet has passed authentication, it indicates that the source address of the sender of the first TCP packet is verified as a true source address, and the sender of the first TCP packet is allowed to set up a TCP connection with the server, and the forwarding module forwards the first TCP packet to the server, so that the client sets up a TCP connection with the server directly; if the source address of the first TCP packet has not passed authentication, the sending module sends a second TCP packet to the client, wherein a part of fields of the second TCP packet encapsulate a Cookie;
the obtaining module is also configured to receive a third TCP packet sent by the client, and deliver the third TCP packet to the second determining module;
the second determining module is configured to: determine whether a corresponding field value of the third TCP packet matches the Cookie, determine that the source address of the client is true if the corresponding field value of the third TCP packet matches the Cookie, determine that the source address of the client is false if the corresponding field value of the third TCP packet does not match the Cookie; and
if the source address of the client is true, when the obtaining module receives a fourth TCP packet sent by the client, the forwarding module forwards the fourth TCP packet to the server.

8. The protective apparatus according to claim 7, **characterized in that**:
if the first TCP packet is a first TCP SYN packet, the second TCP packet is a second TCP SYN packet; a SEQ field in the second TCP SYN packet encapsulates a Cookie; and the third TCP packet is a TCP SYN-ACK packet; and
the corresponding field value of the third TCP packet matches the Cookie, and a value of the ACK field of the third TCP packet is equal to the Cookie plus 1.

9. The protective apparatus according to claim 7, **characterized in that**:
if the first TCP packet is a first TCP SYN packet, the second TCP packet is a second TCP SYN-ACK packet; an ACK field in the second TCP SYN-ACK packet encapsulates a Cookie; and the third TCP packet is a TCP RST packet; and
the corresponding field value of the third TCP packet matches the Cookie, and a value of the SEQ field of the third TCP packet is equal to the Cookie.

10. The protective apparatus according to claim 7, **characterized in that**:
if the first TCP packet is a first TCP SYN-ACK packet, the second TCP packet is a second TCP SYN-ACK packet; an ACK field in the second TCP SYN-ACK packet encapsulates a Cookie; and the third TCP packet is a TCP RST packet; and
the corresponding field value of the third TCP packet matches the Cookie, and a value of the SEQ field of the third TCP packet is equal to the Cookie.

11. The protective apparatus according to claim 7, **characterized in that**: the protective apparatus is set in a routing device or a firewall or a server.

12. A communication system, **characterized by** comprising a server, at least one client, and a protective apparatus located between the server and the at least one client, wherein the protective apparatus is the protective apparatus specified in any of claims 7-11.

13. A communication system, **characterized by** comprising a server, at least one client, and a protective apparatus located between the server and the at least one client, wherein:
the client is configured to send a first Transmission Control Protocol TCP packet to the server to set up a TCP connection with the server;
the protective apparatus is configured to: intercept the first TCP packet sent by the client to the server, and determine whether a source address of a sender of the first TCP packet is verified; forward the first TCP packet to the server if the source address of the sender of the first TCP packet is verified as true; send a second TCP packet to the sender of the first TCP packet if the source address of the sender of the first TCP packet is not verified, wherein a part of fields of the second TCP packet encapsulate a Cookie; determine that the source address of the sender of the first TCP packet is true if a corresponding field value of a third packet returned by the sender of the first TCP packet matches the Cookie; and forward a fourth TCP packet to the server upon receiving the fourth TCP packet sent by the sender of the first TCP packet; and
the server is configured to: receive the fourth TCP packet sent by the protective apparatus, respond to the fourth TCP packet sent by the sender of the first TCP packet, and set up a TCP connection with the client.
